# EUROPÄISCHE PATENTSCHRIFT

(11) **EP 0 957 371 B1**
(45) Veröffentlichungstag und Bekanntmachung des Hinweises auf die Patenterteilung: **28.01.2004**
(21) Anmeldenummer: 99106394.2
(22) Anmeldetag: 27.03.1999
(51) Int. Cl.: G01S 7/03, H01Q 1/32

(54) **Radarsensor**
Radar sensor
Capteur radar

(30) Priorität: 11.05.1998 DE 19820708
(43) Veröffentlichungstag der Anmeldung: 17.11.1999
(73) Patentinhaber: Siemens Aktiengesellschaft, 80333 München (DE)
(72) Erfinder: Altuner, Turgay, 60388 Frankfurt/Main (DE); Hietel, Gerhard, 61348 Bad Homburg (DE); Sellner, Volker, 61276 Weilrod (DE); Dallwitz, Gerhard, 61194 Niddatal (DE)

(56) Entgegenhaltungen:
- DE-C- 19 621 075
- GB-A- 2 076 610
- US-A- 4 373 161
- US-A- 5 568 160

## Beschreibung

Die Erfindung betrifft einen Radarsensor für den Einsatz in einer beweglichen Einrichtung, insbesondere einem Kraftfahrzeug, welcher mindestens ein mit einer Mikrowelleneinheit verbundenes Antennenelement zum Aussenden und/oder Empfangen der von Objekten reflektierten Radarstrahlen aufweist und in einem Gehäuse angeordnet ist, wobei die Antenne aus einer Gehäusewandung geformt ist.

In der GB-2076610-A ist eine Radareinheit beschrieben, welche auf der Unterseite eines Kraftfahrzeuges befestigt ist und zur Messung der Fahrzeuggeschwindigkeit dient. In einer speziellen Ausführung sind das Gehäuse der Radareinheit sowie die im Inneren des Gehäuses befindliche hornförmige Sendeund Empfangsantenne einstückig ausgeführt.

Aus der DE 196 23 196 Cl ist ein Radarsensor für den Einsatz in Kraftfahrzeugen bekannt. Dieser Sensor weist mindestens ein Sendeantennenelement und mehrere Empfangsantennenelemente auf. Der gesamte Radarsensor, der beispielsweise als Abstandsradargerät genutzt wird, ist in einem kompakten Gehäuse untergebracht, in welchem sich eine Mikrowellenschaltung befindet, die als Sende- und Empfangsschaltung ausgeführt ist.

Aus der DE 196 21 075 Cl ist ein Gehäuse für ein Abstandsmessgerät in einem Fahrzeug bekannt, welches einen Sender und Empfänger für Radarstrahlung enthält. Zur vereinfachten Montage des Abstandsregelgerätes ist ein Gehäuseteil einstückig mit der die Radarstrahlung bündelnden Linse ausgebildet.

Solche zur Abstandsregelung in Kraftfahrzeugen eingesetzten Radarsensoren unterliegen aufgrund der Einsatzbedingungen ständigen Vibrationen. Diese Vibrationen können eine Dejustierung von Sensorteilen untereinander oder des gesamten Sensors und/oder eine Lockerung der Elektronik im Gehäuse bewirken. Dies führt im erläuterten Falle der Abstandsregelung in einem Kraftfahrzeug zu schwerwiegenden Folgen, da aufgrund von falsch ausgesandten Sensorsignalen ein falsches Abbild der vor dem Fahrzeug befindlichen Umgebung wiedergegeben wird. Die Abstandsregelung wird so auf falsche Objekte eingestellt. Gefährliche Verkehrssituationen sind die schwerwiegende Folge dieser Fehleinstellung.

Der Erfindung liegt somit die Aufgabe zugrunde, einen Sensor anzugeben, welcher schwingfest ausgebildet und trotzdem einfach herzustellen ist.

Erfindungsgemäß wird die Aufgabe durch die kennzeichnenden Merkmale des Patentanspruchs 1 gelöst.

Die elektrischen Bauelemente, welche die Signalauswertung bzw. die Abstandsregelung sowie die Spannungsversorgung der Sensoreinrichtung realisieren, befinden sich auf verschiedenen Leiterplatten und die Leiterplatten umfassen die Antenneneinheit. Dadurch wird eine kleine und kompakte Bauform der elektrischen Einrichtung erreicht.

Ein besonders kleines Sensorelement wird erreicht, wenn mindestens Teile des Gehäuses das Antennenelement umschließen. Die Herstellung ist besonders einfach, wenn die die Antenne umschließenden Gehäusewandungen plan gestaltet sind. Somit lässt sich in einem einzigen Herstellungsschritt ein Metallgehäuse mit integrierter Antenne herstellen.

Zum leichten Einbringen der Sensor- und/oder Abstandsregelschaltungen besteht das Gehäuse aus einem topfähnlichen Gehäuseteil und einer Gehäuseabdeckung, welche nach der Montage der genannten Elektronik im Gehäuseinneren das topfähnliche Gehäuseteil verschließt.

In einer Ausgestaltung weist das Gehäuse mindestens eine taschenähnliche Aufnahme an der Innenseite einer plan gestalteten Gehäusewandung auf, in welche ein elektrische Bauteile tragendes Trägerelement annähernd parallel zur Gehäusewandung eingeführt ist.
Durch diese ebenfalls gemeinsam mit der Gehäusewandung vorgefertigten taschenähnlichen Aufnahmen ist nicht nur eine schwingfeste Stabilisierung der Leiterplatte möglich, sondern gleichzeitig eine Abschirmung der auf der Leiterplatte angeordneten Elektronik gegen im Gehäuse erzeugte Störstrahlungen. Das Trägerelement ist somit vollständig von Gehäuseteilen umschlossen. Auf die Installation zusätzlicher Abschirmelemente kann verzichtet werden.

Ein solcher Radarsensor bildet somit eine kompakte Einheit, die einfach am Stoßfänger des Fahrzeuges zu montieren ist

Eine einfache Montage mehrerer Trägerelemente im topfähnlichen Gehäuseteil ist dadurch möglich, dass das Trägerelement auf einem Montageelement befestigt ist, welches formschlüssig in das topfähnliche Gehäuseteil einführbar ist.

Da das Gehäuse als Metallgehäuse ausgebildet ist, ist eine Abfuhr der Wärme, die während der Funktion der sich auf den Trägerelementen befindenden Bauelemente von diesen erzeugt wird, durch das Gehäuse besonders günstig zu realisieren, wenn das Trägerelement mit der Bauelemente tragenden Seite der plan ausgebildeten Gehäusewandung direkt gegenüber liegt.

In einer Ausgestaltung ist die das Trägerelement aufnehmende taschenähnliche Aufnahme nach Einführung des Trägerelementes vollständig mit einer gut wärmeleitenden Substanz ausgefüllt. Das Vergießen der Leiterplatte bedingt zum einen eine gute Lagefixierung des Trägerelementes. Zum anderen erfolgt über dieses Vergussmaterial, welches elektrisch isolierend ausgebildet ist, die Wärmeableitung zum Gehäuse. Bei der Bewegung des Fahrzeuges wird die von dem Gehäuse aufgenommene Wärme durch den Fahrtwind an die Umgebung abgegeben.

Alternativ wird nach dem Einbringen des Montageelementes in das topfähnliche Gehäuseteil dieses ebenfalls mit der wärmeleitenden, elektrisch nichtleitenden Vergussmasse vollständig oder nur zwischen Gehäusewandung und Montageelement ausgefüllt.

Das Montageelement ist dabei vorteilhafterweise aus einem wärmeisolierenden Material aufgebaut, um zu verhindern, dass die Wärme in den Innenraum des Gehäuses geleitet wird.

Die Erfindung lässt zahlreiche Ausführungsformen zu. Eines davon soll anhand der in der Zeichnung dargestellten Figuren näher erläutert werden.

Es zeigt:
- Figur 1:: Abstandsregeleinrichtung am Kraftfahrzeug
- Figur 2:: Draufsicht auf die Abstandsregeleinrichtung
- Figur 3:: erste Seitenansicht der Abstandsregeleinrichtung
- Figur 4:: Montageelement
- Figur 5:: zweite Seitenansicht der Abstandsregeleinrichtung
Gleiche Merkmale sind mit gleichen Bezugszeichen gekennzeichnet.

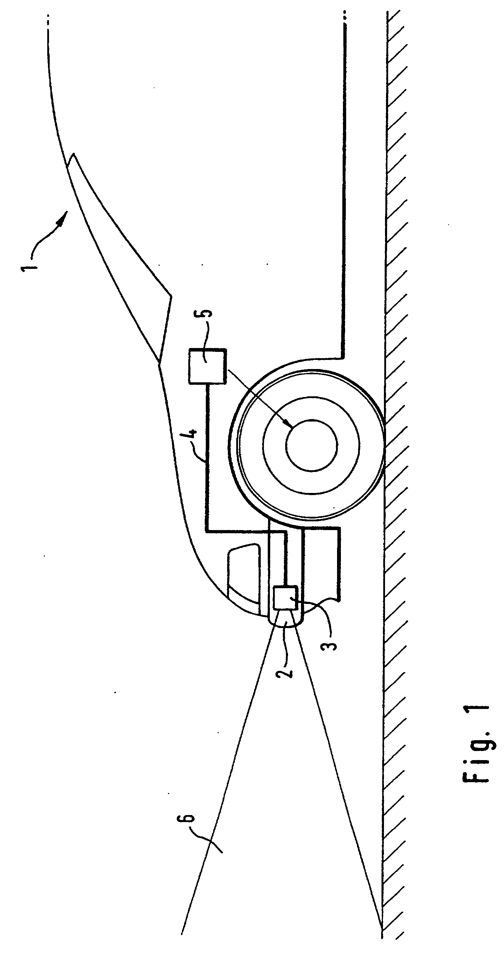

In Figur 1 ist am Stoßfänger 2 eines Kraftfahrzeuges 1 ein automatisches Geschwindigkeits- und Abstandsregelsystem 3 zur Einhaltung des Sicherheitsabstandes von Fahrzeugen angeordnet, welches in einem Gehäuse einen Radarsensor, eine Sensorsignalauswerteschaltung und die Abstandsregeleinrichtung enthält. Über ein im Fahrzeug 1 vorhandenes Bussystems 4 ist das automatische Geschwindigkeits- und Abstandsregelsystem 3 beispielsweise mit der Motorsteuerung 5 verbunden. Elektronische Befehle regulieren automatisch die Geschwindigkeit und somit den Abstand des geregelten Fahrzeuges 1 zu einem vorausfahrenden, langsameren Fahrzeug.
Das vorausfahrende Fahrzeug wird dabei durch den Sensorstrahl 6 des Radarsensors erfaßt.

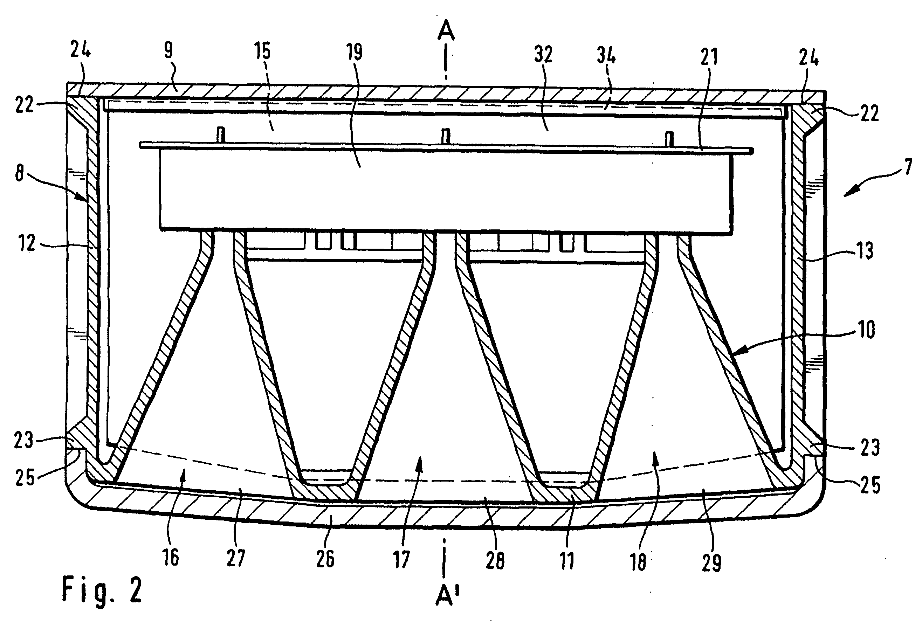

In Figur 2 ist ein zweiteiliges Gehäuse 7 für die Abstandsregeleinrichtung dargestellt. Das Gehäuse 7 besteht aus einem topfähnlichen Gehäuseteil 8, welches einen rechteckigen Grundriß aufweist und das mit einer Abdeckung 9 verschlossen ist. Im Bereich des rechteckigen Grundrisses dieses Gehäuseteiles 8 ist die Antenneneinheit 10 für den Radarsensor aus der Gehäusewandung 11 ausgeformt und einstückig mit den Gehäusewandungen 12, 13, 14,15 ausgebildet. Die parallel zueinander verlaufenden Gehäusewandungen 12, 13 und 14 , 15 umschließen dabei die Antenneneinheit 10.

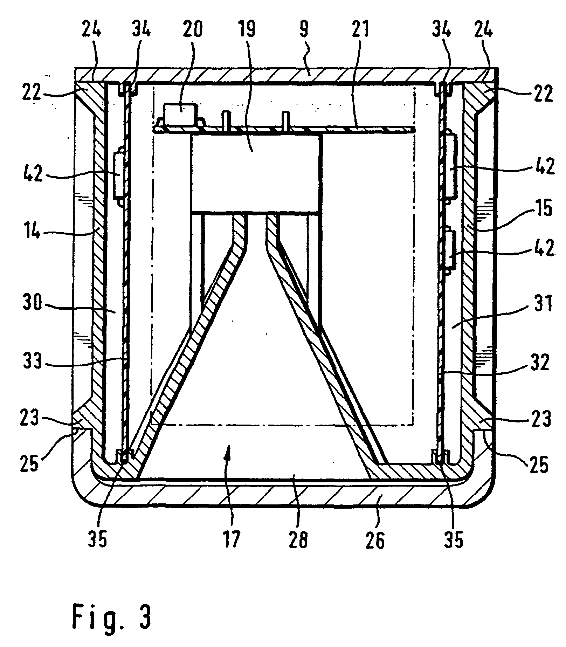

Diese Antenneneinheit 10 besteht dabei aus drei Hornstrahlern 16, 17, 18. Dabei dient der mittlere Hornstrahler 17 der Aussendung der durch eine Mikrowelleneinheit 19 erzeugten Radarstrahlen (Figur 3). Seitlich links und rechts von dem als Sendeantenne arbeitenden Hornstrahler 17 ist jeweils ein weiterer Hornstrahler 16, 18 angeordnet, welche die von Fahrzeugen reflektierten Sensorstrahlen empfangen, die dem geregelten Fahrzeug vorausfahren. Die von dem Strahlern 16, 18 empfangenen Signale werden an eine Sensorsignalauswerteschaltung 20 weitergeleitet, die auf einer ersten Leiterplatte 21 angeordnet ist. (Figur 3) Diese Leiterplatte 21 ist annähernd parallel zur Gehäuseabdeckung 9 zwischen dieser und der Mikrowelleneinheit 19 angeordnet.

Gehäuse 8, 9 und Antenneneinheit 10 sind dabei vorteilhafterweise aus Aluminium hergestellt, was eine Gewichtsreduzierung der gesamten Regeleinheit ermöglicht.

Außen an den die Antenneneinheit 10 umschließenden Gehäusewandungen 12, 13, 14, 15 sind umlaufende Ränder 22, 23 ausgebildet. Ein erster umlaufender Rand 22 schließt mit der entgegengesetzt zur Antenneneinheit 10 angeordneten Öffnung des topfähnlichen Gehäuseteiles 8 ab und bildet mit der der Gehäuseabdeckung 9 zugewandten Fläche einen Auflagebereich 24 für diese Abdeckung 9. Die Gehäuseabdeckung 9 ist dabei mit dem Rand 22 verklebt oder durch eine Schraubverbindung fest an diesem Rand 22 arretiert. Die Abdeckung 9 verschließt die Öffnung des topfähnlichen Gehäuseteiles 8 vollständig und schließt mit dem Rand 22 ab.

Ein zweiter umlaufender Rand 23 ist mit seinem Auflagebereich 25 in der Nähe der Hornstrahler 16, 17, 18 etwas zurückgesetzt zu deren Öffnungen 27, 28, 29 angeordnet.

Senkrecht zu der Strahlrichtung der Hornstrahler 16, 17, 18 ist auf diesem Rand 23 eine Linse 26 aufgebracht, welche die Öffnungen 27, 28, 29 der Hornstrahler 16, 17, 18 vollständig abdeckt. Diese Linse 26 bewirkt eine Bündelung der ausgesendeten Radarstrahlen 6.

Figur 3 zeigt einen Schnitt entlang der Linie A - A'. Die Linse 26 liegt auf dem eben ausgebildeten Auflagebereich 25 des zweiten umlaufenden Randes 23 der Gehäuseaußenwandungen 14, 15 auf, die die Antenneneinheit 10 ebenfalls rechtwinklig umgeben. Hier ist noch einmal deutlich die einteilige Ausarbeitung der Antenneneinheit 10 und des topfähnlichen Gehäuseteiles 8 dargestellt.

Wie in Figur 3 dargestellt ist, sind an der Innenseite der die Antenneneinheit 10 umschließenden Gehäusewandungen 14, 15 Gehäusetaschen 30, 31 zur Aufnahme der Leiterplatten 32, 33 vorgesehen. Dabei wird jede Leiterplatte 32, 33 einzeln in zwei gegenüberliegende Führungsnuten 34, 35 jeder Gehäusetasche 30, 31 eingeführt, welche die Leiterplatte 32, 33 in der Gehäusetasche 30, 31 halten. Nachdem die Leiterplatten in den Gehäusetaschen positioniert sind, werden diese mit einem wärmeleitenden, elektrisch isolierenden Kunststoff ausgegossen.

Bei dieser Ausführung wird die Leiterplatte 21 mit der Sensorsignalauswerteschaltung 20 vor Aufbringung der Gehäuseabdeckung 9 mit der Mikrowelleneinheit 19, die mit der Antenneneinheit 10 elektrisch verbunden ist, verlötet.

Aufgrund der sehr unterschiedlichen Dimensionierung der in einem Gehäuse integrierten Schaltungskomponenten entstehen innerhalb des Gehäuses elektromagnetische Störstrahlungen, die das relativ kleine Sensorsignal ebenfalls beeinflussen. Diese Einflüsse werden durch die als Abschirmelemente dienende Gehäusetaschen zuverlässig unterdrückt.

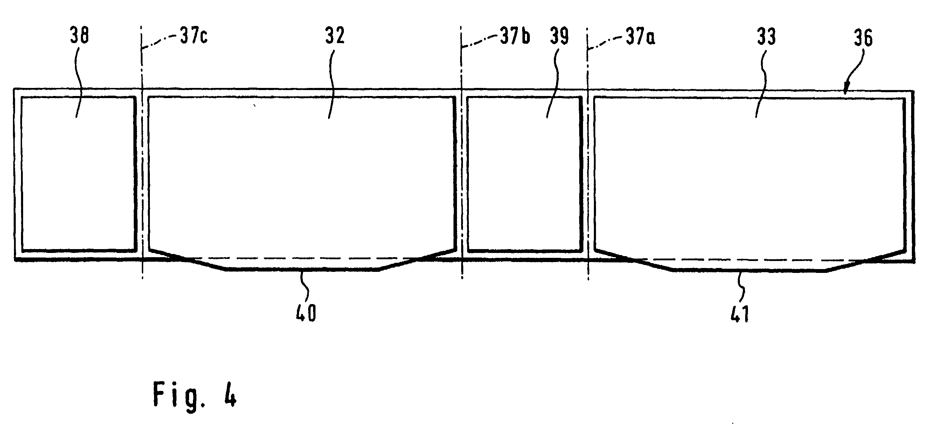

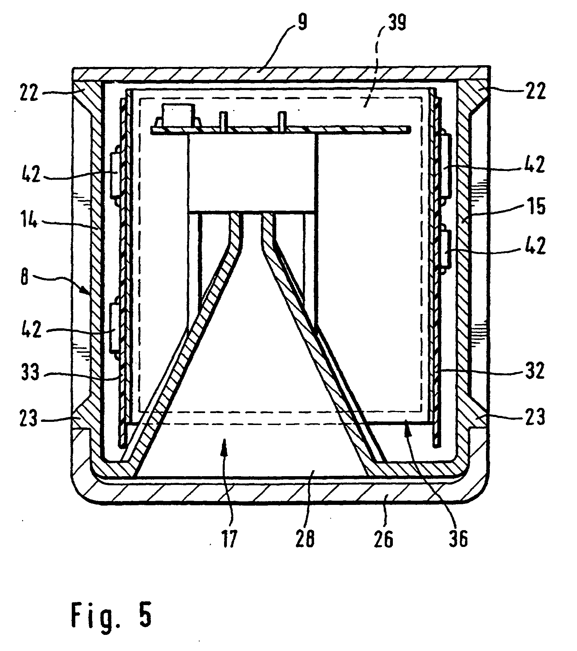

Eine weitere Ausführung der erfindungsgemäßen Lösung ist in den Figuren 4 und 5 dargestellt.
Die Leiterplatten 32, 33, 38, 39 sind auf einem z.B. aus Aluminium hergestellten Montageelement 36 angeordnet, welches flächig gestaltet ist. Das Montageelement 36 ist in mehrere Montageflächen 36a, 36b, 36c, 36d eingeteilt, wobei auf jeder Montagefläche 36a-36d eine Leiterplatte aufgeklebt ist. Die Leiterplatten 32 und 33 überragen das Montageelement 36 mit ihren Rändern 40, 41. Die Ränder 40, 41 sind der Form der Antenneneinheit 10 angepaßt. Nach der Anbringung der Leiterplatten 32,33,38,39 werden die Montagebereiche 36a - 36d entlang der Biegelinien 37a - 37c um jeweils 90° gebogen. Auf diese Weise wird einfach eine käfigähnliche Form des Montageelementes 36 erreicht, wobei die Leiterplatten außen auf dem Montageelement 36 aufliegen.

Dieses käfigähnliche Montageelement 36 wird in das topfähnliche Gehäuseteil 8 so eingeführt, daß jeweils eine Leiterplatte annähernd parallel zu einer Gehäusewandung angeordnet ist. Die Leiterplatte 32 liegt der Gehäusewandung 15, die Leiterplatte 33 der Gehäusewandung 14 gegenüber. Weiterhin ist die Leiterplatte 38 gegenüber der Gehäusewandung 12 und die Leiterplatte 39 gegenüber der Gehäusewandung 13 angeordnet.

Das Montageelement 36 ist durch die Ränder 40, 41 so dimensioniert, daß es paßgerecht in das topfähnliche Gehäuseteil 8 eingeführt werden kann und somit eine formschlüssige Verbindung mit diesem eingeht, wodurch keine zusätzlichen Arretierungsmittel mehr notwendig sind.

Das Montageelement 36 kann aber auch als Rahmen ausgeführt werden, welcher die Leiterplatten nur an ausgewählten Flächen berührt und trägt.

Auf den Leiterplatten 32,33, 38 und 39 befinden sich elektrische Bauelemente 42, welche die Signalauswertung bzw. die Abstandsregelung sowie die Spannungsversorgung der Sensoreinrichtung realisieren. Diese Bauelemente 42 sind so angeordnet, daß sie in Richtung der Gehäuseaußenwandungen 12, 13, 14, 15 weisen. Nach der Einführung des die Leiterplatten tragenden Montageelementes 36 in das topfähnliche Gehäuseteil 8 wird der gesamte Gehäuseinnenraum zwischen Leiterplatten 32,33,38,39 und Montageelement 36 sowie zwischen den Montageelement 36 und der Antenneneinheit 10 mit dem gut wärmeleitfähigen Kunststoff ausgefüllt, wodurch die Leiterplatten 32, 33, 38, 39 lagestabilisiert werden. Die Leiterplatten umfassen somit die Antenneneinheit 10 vollständig.

Die die Sensorsignalauswerteschaltung 20 tragende Leiterplatte 21, an weicher die Mikrowelleneinheit 19 angeordnet wird, wird nach dem Ausfüllen des Gehäuseinnenraumes , bei welchem die elektrischen Anschlüsse des Mikrowellensenders frei bleiben, mit diesen verlötet.

Die einzelnen Leiterplatten sind untereinander mit nicht weiter dargestellten flexiblen Verbindungen elektrisch kontaktiert.

Als Leiterplatten werden die allgemein bekannten Epoxidharzplatten verwendet. Alternativ dazu können aber auch Keramiksubstrate mit aufgebrachten Leitbahnen verwendet werden.

## Patentansprüche

1. Radarsensor für den Einsatz in einer beweglichen Einrichtung, insbesondere einem Kraftfahrzeug, welcher mindestens ein mit einer Mikrowelleneinheit verbundenes Antennenelement zum Aussenden und/oder Empfangen der von Objekten reflektierten Radarstrahlen aufweist und in einem Gehäuse angeordnet ist, wobei die Antenne (10) aus einer Gehäusewandung (11) geformt ist, **dadurch gekennzeichnet, dass** in dem Gehäuse (8,9) eine Sensorsignalauswerteeinheit (20) und eine Abstandsregeleinheit angeordnet sind, welche im Gehäuseinnenraum auf die Antenne (10) umschließenden, mehreren verschiedenen Trägerelementen (32, 33, 38, 39) angeordnet sind.

2. Radarsensor nach Anspruch 1 **dadurch gekennzeichnet, daß** mindestens Teile (12, 13, 14, 15) des Gehäuses (8,9) die hornähnliche Antenne (10) umschließen.

3. Radarsensor nach Anspruch 1 oder 2 **dadurch gekennzeichnet, daß** das Gehäuse aus einem topfähnlichen Gehäuseteil (8) und einer Abdeckung (9) besteht.

4. Radarsensor nach Anspruch 3, **dadurch gekennzeichnet, daß** das topfähnliche Gehäuseteil (8) auf der Gehäuseinnenseite mindestens eine taschenähnliche Aufnahme (30,31) aufweist, in welche mindestens eines der Trägerelemente (32,33,38,39) annähernd parallel zur Gehäusewandung (12, 13, 14, 15) eingeführt ist.

5. Radarsensor nach Anspruch 3, **dadurch gekennzeichnet, daß** mindestens eines der Trägerelemente (32, 33, 28, 29) auf einem Montageelement (36) befestigt ist, welches formschlüssig in das topfähnliche Gehäuseteil (8) einführbar ist.

6. Radarsensor nach Anspruch 5, **dadurch gekennzeichnet, daß** das Montageelement (36) aus einem wärrneisolierenden Material besteht.

7. Radarsensor nach Anspruch 5 oder 6 **dadurch gekennzeichnet, daß** nach Einbringung des Montageelementes (36) in das Gehäuses (8,9) dieses vollständig mit einer wärmeleitenden Substanz ausgefüllt wird.

8. Radarsensor nach Anspruch 4 oder 5, **dadurch gekennzeichnet, daß** die Trägerelemente (32, 33, 28, 29) mit der die Bauelemente (42) tragenden Seite der Gehäusewandung (12, 13, 14, 15) direkt gegenüber liegt.

9. Radarsensor nach Anspruch 4, **dadurch gekennzeichnet, daß** die mit den Trägerelementen (32, 33) bestückten taschenähnlichen Aufnahmen (30, 31) vollständig mit der gut wärmeleitenden Substanz ausgefüllt sind.

## Claims

1. Radar sensor for use in a moving device, in particular a motor vehicle, which has at least one antenna element, which is connected to a microwave unit, for transmitting and/or receiving the radar beams reflected from objects, and which is arranged in a housing, with the antenna (10) being formed from one housing wall (11), **characterized in that** a sensor signal evaluation unit (20) and a distance control unit are arranged in the housing (8, 9), and are arranged in the housing interior on two or more different mount elements (32, 33, 38, 39) which surround the antenna (10).

2. Radar sensor according to Claim 1, **characterized in that** at least parts (12, 13, 14, 15) of the housing (8, 9) surround the horn-like antenna (10).

3. Radar sensor according to Claim 1 or 2, **characterized in that** the housing is formed from a pot-like housing part (8) and a cover (9).

4. Radar sensor according to Claim 3, **characterized in that** the pot-like housing part (8) has at least one pocket-like holder (30, 31) on the inside of the housing, in which holder (30, 31) at least one of the mount elements (32, 33, 38, 39) is inserted, approximately parallel to the housing wall (12, 13, 14, 15) .

5. Radar sensor according to Claim 3, **characterized in that** at least one of the mount elements (32, 33, 28, 29) is mounted on a mounting element (36) which can be inserted in an interlocking manner into the pot-like housing part (8).

6. Radar sensor according to Claim 5, **characterized in that** the mounting element (36) is composed of thermally insulating material.

7. Radar sensor according to Claim 5 or 6, **characterized in that**, once the mounting element (36) has been introduced into the housing (8, 9), the housing (8, 9) is completely filled with a thermally conductive substance.

8. Radar sensor according to Claim 4 or 5, **characterized in that** the mount elements (32, 33, 28, 29) are located directly opposite that side of the housing wall (12, 13, 14, 15) to which the components (42) are fitted.

9. Radar sensor according to Claim 4, **characterized in that** the pocket-like holders (30, 31) which are fitted with the mount elements (32, 33) are completely filled with the highly thermally conductive substance.

## Revendications

1. Capteur radar pour utilisation dans un dispositif mobile, en particulier un véhicule automobile, qui dispose au moins d'un équipement d'antenne relié à une unité micro-ondes pour l'émission et/ou la réception des rayons radar réfléchis par des objets et qui est installé dans un boîtier, l'antenne (10) étant mise en forme sur une paroi du boîtier (11), **caractérisé en ce que**, dans le boîtier (8, 9), on a disposé une unité d'analyse des signaux du capteur (20) et une unité de réglage de distance, lesquelles sont disposées dans l'espace intérieur du boîtier sur un certain nombre d'éléments porteurs différents (32, 33, 38, 39) qui entourent l'antenne.

2. Capteur radar selon la revendication 1, **caractérisé en ce qu**'au moins des parties (12, 13, 14, 15) au moins du boîtier (8, 9) entourent l'antenne (10) en forme de cornet.

3. Capteur radar selon les revendications 1 ou 2, **caractérisé en ce que** le boîtier comporte une partie de boîtier en forme de cuvette (8) et un couvercle (9).

4. Capteur radar selon la revendication 3, **caractérisé en ce que** la partie du boîtier en forme de cuvette (8) dispose sur la face intérieure du boîtier d'au moins un logement en forme d'étui (30, 31), dans lequel au moins un des éléments porteurs (32, 33, 38, 39) est introduit de façon sensiblement parallèle à la paroi du boîtier (12, 13, 14, 15).

5. Capteur radar selon la revendication 3, **caractérisé en ce que**, au moins un des éléments porteurs (32, 33, 28, 29) est fixé sur un élément de montage (36), lequel est insérable par engagement positif dans le boîtier en forme de cuvette (8).

6. Capteur radar selon la revendication 5, **caractérisé en ce que** l'élément de montage (36) consiste en un matériau thermiquement isolant.

7. Capteur radar selon les revendications 5 ou 6, **caractérisé en ce que**, après introduction de l'élément de montage (36) dans le boîtier (8, 9), celui-ci est complètement rempli d'une substance thermiquement conductrice.

8. Capteur radar selon la revendication 4 ou 5, **caractérisé en ce que** les éléments porteurs (32, 33, 28, 29) avec le côté portant le composant (42) se situe directement en face des cloisons (12, 13, 14, 15) du boîtier.

9. Capteur radar selon la revendication 4, **caractérisé en ce que** les logements en forme d'étui (30, 31) garnis des éléments porteurs (32, 33) sont complètement remplis d'une substance présentant une bonne conductivité thermique.
